# FASCICULE DE BREVET EUROPEEN

(11) **EP 0 661 000 B1**
(45) Date de publication et mention de la délivrance du brevet: **27.01.1999**
(21) Numéro de dépôt: 94420372.8
(22) Date de dépôt: 27.12.1994
(51) Int. Cl.: A01N 25/14, A01N 25/12

(54) **Compositions agrochimiques sous forme de granulés dispersables**
Agrochemische Mittel in Form von dispergierbaren Granulaten
Agrochemical compositions in the form of dispersible granulates

(30) Priorité: 29.12.1993 FR 9316020
(43) Date de publication de la demande: 05.07.1995
(73) Titulaire: RHONE-POULENC AGRO, 69009 Lyon (FR)
(72) Inventeur: Croze, Ernest, F-69500 Bron (FR); Gautier, Martine, F-69760 Limonest (FR)
(74) Mandataire: Brachotte, Charles

(56) Documents cités:
- EP-A- 0 391 851
- EP-A- 0 544 602
- WO-A-93/22215
- DATABASE WPI Section Ch, Week 9239, Derwent Publications Ltd., London, GB; Class A03, AN 92-320859/39 & JP-A-04 226 901 (SANKYO CO. LTD.) 17 Août 1992
- DATABASE WPI Section Ch, Week 9320, Derwent Publications Ltd., London, GB; Class C, AN 93-164300/20 & JP-A-05 097 604 (HOKKO CHEM. IND. CO. LTD.) 20 Avril 1993

## Description

La présente invention a pour objet une nouvelle composition agrochimique et un système de conteneurisation comprenant ladite composition.

On connaît, notamment par la demande de brevet EP 544602, des systèmes de conteneurisation, comprenant des granulés dispersables effervescents de matière active en agriculture placés dans un sac dont la paroi est un film constitué d'un matériau filmogène, soluble ou dispersable dans l'eau. De tels systèmes offrent à l'utilisateur, notamment à l'agriculteur, une commodité d'emploi très appréciée, et notamment la possibilité d'obtenir rapidement et sans moyens d'agitation particuliers un liquide de pulvérisation homogène (appelé bouillie), tout en permettant une grande sécurité d'utilisation.

Cependant de tels granulés sont usuellement fabriqués par des techniques dites d'agglomération ou de granulation à sec, c'est-à-dire sans solvant et notamment sans eau. De telles techniques rendent désirable la préparation, en préalable à la granulation, de poudre très fine, c'est-à-dire de poudre dont les particules constitutives ont une taille comprise entre 6 et 30 µm, de préférence entre 8 et 20 µm. Or ces poudres sont susceptibles d'entrer en contact soit directement avec la peau des personnes qui les manipulent, soit, après leur mise en suspension accidentelle dans l'air sous forme de nuages, avec les voies respiratoires supérieures de ces mêmes personnes. De tels contacts peuvent survenir avec les opérateurs présents sur l'installation industrielle, lors de fuites éventuelles au niveau des ouvertures des mélangeurs, ou encore avec les opérateurs qui assurent le nettoyage des appareils, qu'il s'agisse des mélangeurs ou des granulateurs, ou encore avec les opérateurs qui effectuent la prise d'échantillons nécessaire au contrôle du processus de fabrication. Or il est souhaitable de limiter au mininum, voire d'éviter totalement tout contact de ce type dans le cas de matières actives pouvant présenter un risque de toxicité, ceci afin d'assurer la sécurité des opérateurs et de garantir l'hygiène des locaux de fabrication .

Par ailleurs, le contact intime dans ces granulés entre la matière active qui peut présenter des traces d'humidité résiduelle et l'agent effervescent qui est hygroscopique, est souvent préjudiciable à la tenue au stockage c'est-à-dire au maintien des qualités requises des granulés, notamment concernant leur aptitude à l'effervescence, du fait de phénomènes de passivation.

La demande de brevet japonais 4-226901 publiée le 17 Août 1992 mentionne bien un sachet soluble contenant des granulés dispersables de matière active d'une part et des granulés effervescents sans matière active d'autre part, ce qui peut contribuer à réduire ces phénomènes de passivation. Cependant, les granulés dispersables décrits sont fabriqués par compactage à rouleaux qui est une technique de granulation à sec, de sorte que cette demande de brevet méconnaît totalement l'importance critique du problème à résoudre, lié aux conditions d'hygiène industrielle de la fabrication du produit.

Un objet de la présente invention est la mise à disposition de compositions agrochimiques dont la fabrication présente un risque diminué pour les ouvriers.

Un autre objet de la présente invention est la mise à disposition de compositions agrochimiques de fabrication plus aisée.

Un autre objet de la présente invention est une amélioration du comportement au stockage des compositions agrochimiques.

Un autre objet de la présente invention est la mise à disposition des agriculteurs de compositions concentrées agrochimiques permettant après dilution à l'eau d'obtenir facilement et rapidement un liquide de pulvérisation homogène.

Un autre objet de la présente invention est la mise à disposition des agriculteurs de compositions concentrées agrochimiques dont la manipulation offre une sécurité améliorée.

Un autre objet de la présente invention est la mise à disposition de l'utilisateur d'une composition concentrée agrochimique dans un sachet soluble dont la vitesse de dissolution dans l'eau est augmentée.

Il a maintenant été trouvé que ces buts pouvaient être atteints en tout ou en partie grâce aux compositions et systèmes de conteneurisation selon l'invention.

Dans la présente invention, les pourcentages indiqués sont des pourcentages pondéraux, pour autant qu'il n'en soit pas spécifié autrement, et l'on entend par matières actives, des matières actives en agriculture telles que les agents pour la protection des plantes, les produits agrochimiques, les pesticides, les régulateurs de croissance ou les agents de nutrition des plantes. Les pesticides sont plus particulièrement des herbicides, des insecticides, des fongicides, des nématicides et des acaricides.

La densité apparente au sens de la présente invention est essentiellement le rapport du poids d'une quantité déterminée de granulés au volume occupé par ces mêmes granulés après tassement réalisé dans des conditions standards, c'est-à-dire dans les conditions suivantes : on verse 80 g de granulés à tester dans une éprouvette de 250 cm³ à laquelle on imprime 50 mouvements périodiques composés d'une translation de bas en haut d'amplitude 2,5 cm, suivie d'une translation de haut en bas de même amplitude. Chaque période dure 2 secondes. A la fin de l'opération, on note le volume occupé par les granulés dans l'éprouvette, d'où l'on déduit la densité apparente des granulés.

La présente invention a pour objet, en premier lieu, des compositions agrochimiques qui sont des compositions concentrées solides caractérisées en ce qu'elles sont un mélange homogène :
- d'une (ou plusieurs) compositions concentrées A sous forme de granulés dispersables, chaque granulé contenant au moins une matière active et ne contenant pas d'agent effervescent, et ayant un volume cumulé de pores compris entre 0,17 et 0,35, de préférence entre 0,20 et 0,30 ml/g et ayant une densité apparente comprise entre 0,35 et 0,8, de préférence entre 0,4 et 0,7 g/cm³ ; et
- d'une composition concentrée B sous forme de granulés dispersables, chaque granulé contenant un agent effervescent et ne contenant pas de matière active, ayant un volume cumulé de pores compris entre 0,020 et 0,13 de préférence entre 0,025 et 0,10 ml/g et ayant une densité apparente comprise entre 0,8 et 1,5 g/cm³, de préférence entre 1,0 et 1,4 g/cm³ ;
- le rapport quantitatif A/B étant compris entre 0,01 et 30, de préférence entre 0,05 et 10, encore plus préférentiellement entre 0,08 et 5.

Le volume cumulé des pores des granulés selon l'invention est mesuré à l'aide d'un porosimètre à mercure selon des techniques connues en soi.

On entend par granulé dispersable un agglomérat solide et cohésif de particules constitutives qui ont une taille comprise entre 1 et 20 µm, lequel agglomérat après mélange à l'eau se délite ou se disperse pour donner une suspension homogène et stable. La présentation en granulé dispersable offre à l'utilisateur une grande commodité d'emploi qui les rend très désirables.

Les possibilités de réaction chimique entre l'agent effervescent de la composition solide B et une éventuelle humidité résiduelle de la matière active de la composition solide A sont très fortement limitées en raison de la très faible surface d'échange entre ces deux compositions solides granulées, de sorte qu'il en résulte une tenue au stockage de la composition selon l'invention qui est fortement améliorée.

La différence des caractéristiques de porosité entre les granulés dispersables contenant la ou les matières actives et les granulés dispersables effervescents qui n'en contiennent pas est particulièrement avantageuse pour favoriser une dispersion améliorée de la composition agrochimique selon l'invention. En effet, l'eau pénétre plus rapidement à l'intérieur des granulés contenant la ou les matières actives, malgré le caractère fortement hydrophobique des matières actives utilisées dans la pratique, et les granulés inertes effervescents contribuent de façon plus efficace au délitage rapide des granulés dispersables de matière active.

Selon un aspect avantageux de l'invention, la matière active en agriculture utilisable dans les granulés dispersables de la composition A est un pesticide, de préférence un insecticide, un nématicide ou un acaricide. Il est en effet toujours souhaitable, même pour une matière active en agriculture qui est connue pour ne présenter aucun danger pour l'utilisateur, de protéger le fabricant susceptible d'être fréquemment au contact de poudres très fines contenant ladite matière active, et ce durant une longue période, par exemple une période supérieure à 1 mois, de préférence supérieure à 1 an.

Selon un autre aspect avantageux de l'invention, la matière active utilisable dans les granulés dispersables de la composition A a une dose léthale (DL) 50 inférieure à 2000 mg/kg, de préférence inférieure à 1550 mg/kg, et encore plus préférentiellement inférieure à 500 mg/kg. La dose léthale (DL) 50 est une mesure de la toxicité dermale aiguë obtenue par la détermination de la quantité de matière active qui, lorsqu'elle est appliquée sur la peau d'un animal, induit 50 % de mortalité dans le groupe d'animaux ainsi traités. La DL 50 est exprimée en poids de matière active appliquée rapportée à l'unité de poids de l'animal traité, soit en mg par kg. La DL 50 et la toxicité dermale aiguë varient en raison inverse c'est-à-dire qu'une faible valeur de la DL 50 correspond à une toxicité dermale aiguë élevée et réciproquement. L'animal choisi est soit le rat soit le lapin, et, plus précisément celui de ces 2 animaux qui conduit à la DL 50 la plus faible, autrement dit l'animal qui est le plus sensible à la substance dont on veut mesurer la toxicité dermale aiguë. Le protocole suivi pour la détermination précise de la DL 50 est la méthode n° 402 des "Lignes directrices de l'OCDE pour les essais de produits chimiques" ouvrage publié par l'OCDE (Organisation de Coopération et de Développement Economiques), édition 1987. Cette caractéristique de l'invention est particulièrement avantageuse en ce que les compositions objets de l'invention correspondantes peuvent alors être préparées sans qu'il y ait aucun risque de contact pour les opérateurs présents dans l'atelier de fabrication avec des poudres très fines de matière active dont la toxicité dermale aiguë élevée est susceptible de porter atteinte à la bonne santé desdits opérateurs.

Selon un autre aspect avantageux de l'invention, les granulés dispersables utilisables dans les compositions A et B selon l'invention ont un diamètre médian compris entre 0,150 et 10 mm, de préférence entre 0,200 et 4 mm. On entend par diamètre médian, la valeur médiane de la courbe de répartition granulométrique des granulés qui est mesurée par la méthode suivante : on fait passer 50 g de granulés à analyser sur un empilement de 10 tamis superposés, d'ouverture de maille allant de 5 mm à 0,074 mm. Après tamisage pendant 10 mn, les résidus retenus sur chaque tamis sont pesés individuellement et exprimés en pourcentage relativement à la masse de granulés analysés. On considère que lesdits pourcentages de résidus sont répartis selon une loi normale, encore appelée loi de Laplace-Gauss, dont on calcule la valeur médiane égale au diamètre médian des granulés analysés. L'aptitude de ces granulés à s'écouler aisément, comme des liquides, est particulièrement appréciée par les agriculteurs pour la préparation du liquide de pulvérisation ainsi que par les ouvriers de fabrication pour leur conditionnement. De plus, l'emballage contenant de tels granulés ne contient plus, après sa vidange, aucun résidu adhérent aux parois et au fond, susceptible de polluer l'environnement ou de causer des difficultés aux personnes chargées de la destruction ou du recyclage de ces emballages.

Selon un autre aspect de l'invention, également avantageux, les granulés dispersables de la composition selon l'invention sont caractérisées en ce que leur taille minimum est supérieure à 0,05 mm, de préférence supérieure à 0,15 mm. La taille minimum des granulés est mesurée, selon l'ordre de grandeur de cette taille par une méthode soit de tamisage à sec, soit de tamisage humide soit encore par une méthode optique, par exemple par diffraction d'un faisceau laser. De tels granulés ne présentent pas de risque de former une dispersion dans l'air sous forme de nuage, et donc d'entrer en contact avec la peau des personnes qui les manipulent ou encore de pénétrer dans leurs voies respiratoires supérieures.

Selon un autre aspect de l'invention, la composition concentrée solide de l'invention est caractérisée en ce que le rapport diamètre médian des granulés de la composition A / diamètre médian des granulés de la composition B est inférieur ou égal à 5, de préférence inférieur ou égal à 2. Dans ce cas, la composition concentrée solide est plus stable, sur le plan de l'homogénéïté du mélange au cours du stockage et du transport, de sorte que l'agriculteur peut utiliser ladite composition, contenue dans son emballage, en plusieurs fois, autrement dit en pratiquant des prélèvements successifs du produit. Chacune des quantités ainsi prélevées a alors la même structure et les mêmes propriétés que l'ensemble de la composition placée dans son emballage.

Selon un autre aspect de l'invention, la teneur en matière active ou en matières actives de la (ou des ) compostions concentrées A est comprise entre 5 et 100 %, de préférence entre 50 et 90 %. La possibilité de disposer de compositions agrochimiques à haute teneur en matière active permet ainsi de réduire le volume de produit commercialisé à stocker ou à transporter et donc d'engendrer une réduction des coûts correspondants.

Selon un autre aspect de l'invention, l'agent effervescent de la composition B est avantageusement constitué d'un couple de produits tels qu'un carbonate (ou hydrogénocarbonate, de préférence alcalin) et un acide (de préférence solide et faible). Le rapport pondéral acide/carbonate est généralement compris entre 0,3 et 30, de préférence entre 0,5 et 15.

Le carbonate alcalin peut être dérivé d'un métal alcalin (notamment sodium ou potassium ) ou alcalino-terreux ( calcium ou magnésium ), ou d'un cation ammonium ou organoammonium (carbonate dérivé d'une amine primaire secondaire ou tertiaire ou d'un cation ammonium quaternaire ), mais est de préférence dérivé d'un métal alcalin.

L'acide solide et faible est avantageusement un acide carboxylique ou polycarboxylique ou phosphorique ou phosphonique ou l'un de leurs sels ou esters à fonction acide.

Selon un autre aspect de l'invention, la teneur de l'agent effervescent dans la composition concentrée B est comprise entre 3 et 95 %, de préférence entre 5 et 60 % .

Selon un autre aspect de l'invention, les granulés dispersables des compositions A et B comprennent en outre :
- de 0,1 à 10 %, de préférence de 0,5 à 5 % d'un agent mouillant, c'est-à-dire d'un composé permettant au granulé de pénétrer rapidement dans l'eau,
- de 0,3 à 25 %, de préférence de 2 à 20 % d'un agent dispersant c'est-à-dire d'un composé assurant la tenue en suspension des particules dans la bouillie d'utilisation, et
- de 0 à 90 %, de préférence de 0 à 30 % d'un support ou charge, soluble ou insoluble dans l'eau.

Comme composés utilisables comme agent mouillant , on peut citer par exemple les sels de type alkylarylsulfonate, notamment les alkylnaphtalène sulfonates alcalins, les sels d'acides polycarboxyliques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques.

Comme composés utilisables comme agent dispersant, on peut citer par exemple les polymères de type arylsulfonate, notamment les polynaphtalène sulfonates alcalins obtenus par condensation d'(alkyl)arylsulfonates avec du formaldéhyde, les lignosulfonates, les polyphénylsulfonates, des sels d'acides polyacryliques, des sels d'acides lignosulfoniques, des sels d'acides phénolsulfoniques ou naphtalènesulfoniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents.

Le support des granulés dispersables des compositions A et B est une matière solide organique ou minérale, naturelle ou synthétique. Ce support est généralement inerte, acceptable en agriculture, notamment sur la plante traitée. Il peut être choisi par exemple parmi l'argile, la terre de diatomées, les silicates naturels ou synthétiques, la silice, les résines, les cires, les engrais solides, les sels minéraux solubles ou non, des dérivés organiques, des composés polysaccharidiques tels que amidon, cellulose, sucres, lactose.

Parmi les supports utilisables, on préfère les supports hydrophiles ayant une action désintégrante, c'est-à-dire facilitant l'éclatement du granulé en ses particules constitutives en présence d'eau. Comme composés de ce type, on peut citer les bentonites (naturelles ou activées) , l'amidon et ses dérivés (notamment les alkylamidons et les carboxyalkylamidons), les celluloses (notamment la cellulose microcristalline) et les dérivés de la cellulose (notamment la carboxyalkylcellulose), les alginates, des sels minéraux solubles, la polyvinylpyrrolidone réticulée.

Les granulés dispersables des compositions A et B peuvent contenir, outre les constituants indiqués ci-avant, d'autres composés, notamment des composés ayant plus spécifiquement une action de liant, c'est-à-dire un composé de type polymérique aidant à la cohésion et à la mise en oeuvre des granulés. Ces composés à action de liant peuvent ou bien être des composés distincts de ceux cités précédemment, ou bien ils peuvent être ces mêmes composés dans la mesure où ils sont capables d'avoir une double action. Comme composés ou agents de ce type, on préfère utiliser des agents tels que des gommes, notamment la gomme arabique ; des colles, notamment la dextrine ; des sucres, notamment le glucose et le lactose ; des dérivés cellulosiques, notamment les alkylcellulose et la carboxyalkylcellulose ; de l'amidon; de la farine, des polymères, notamment la polyvinylpyrrolidone, l'alcool polyvinylique, le polyéthylèneglycol, le polyacrylate, les polyacétate de vinyle; des cires solubles, des silicates alcalins.

L'agent liant et l'agent ou support à propriétés désintégrantes n'ont pas des effets contraires dans la mesure où l'action de l'agent liant s'exerce à l'état solide pour lier ensemble les différentes particules solides des compositions selon l'invention, et que l'action de l'agent à propriétés désintégrantes s'exerce à l'état liquide quand les compositions selon l'invention sont dispersées dans l'eau.

Outre encore les constituants décrits ci-avant, les granulés dispersables des compositions selon l'invention peuvent contenir des anti-mousses, des agents densifiants, des séquestrants, des stabilisants, des agents de pénétration, des conservateurs, des adhésifs, des agents antimottants, des colorants et autres.

Bien entendu les granulés dispersables des compositions selon l'invention peuvent encore contenir tous les additifs solides ou liquides correspondant aux techniques habituelles de la formulation agrochimique.

Parmi les constituants de toute nature des granulés dispersables selon l'invention, on préfère en outre choisir ceux qui, par leur nature et leur dose fournissent des granulés ayant :
* un temps de mouillabilité, tel que défini ci-après, inférieur à 5 mn, de préférence inférieur à 2 mn,
* un taux de dispersabilité, tel que défini ci-après, supérieur à 85 %, de préférence supérieur à 92 %, et
* un taux de suspensibilité, tel que défini ci-après, supérieur à 50 %, de préférence supérieur à 70 %.

Les granulés possédant ces caractéristiques permettent une préparation du liquide de pulvérisation par l'agriculteur particulièrement facile, et donnent lieu à une pulvérisation de la ou des matières actives qui assure une répartition uniforme de celles-ci sur la surface à traiter.

Le temps de mouillabilité est mesuré selon la technique MT 53.3.1 décrite dans le CIPAC HANDBOOK, volume 1 pages 966-967, édité par G R Raw en 1970. Il consiste essentiellement à mesurer le temps de mouillabilité de 5g de granulé versés sur 100 ml d'eau.

Le taux de dispersabilité est mesuré selon la technique suivante. On verse 10 g de granulé dans une éprouvette de 250 ml contenant 250 ml d'eau dure définie dans la méthode 18.1.4 décrite dans le CIPAC HANDBOOK, volume 1 pages 875-878, édité par G R Raw en 1970. On retourne 10 fois l'éprouvette et son contenu et l'on procède à un tamisage en versant le contenu de l'éprouvette sur un tamis d'ouverture de mailles égale à 160 µm. On séche et pèse le résidu. Le taux de dispersabilité est alors exprimé par le pourcentage de granulé passant au travers du tamis.

Le taux de suspensibilité est mesuré selon la technique MT 15.1 note 4 décrite dans le CIPAC HANDBOOK, volume 1 pages 861-865, édité par G R Raw en 1970. Il consiste essentiellement à verser 2,5 g de granulé dans une éprouvette de 250 ml contenant 250 ml d'eau dure, à retourner 30 fois l'éprouvette et son contenu, à laisser reposer 30 mn et à mesurer la masse de matière contenue dans les 25 ml (10 % du volume de l'éprouvette) inférieurs de l'éprouvette ; le taux de suspensibilité est alors exprimé par le pourcentage de matière restant en suspension dans les 90 % supérieurs de l'éprouvette.

Les compositions agrochimiques objets de l'invention sont préparées par simple mélange des compositions A et B par tout procédé permettant un mélange homogène de ces compositions dans les proportions souhaitées, tel qu'un mélangeur à ruban, un malaxeur ou un tambour tournant selon un axe oblique.

Les granulés dispersables de la composition A sont préparés selon le procédé suivant particulièrement avantageux.

Dans une première étape, la matière active à l'état de poudre grossière, par exemple de poudre dont les particules ont une taille comprise entre 40 µm et 2 cm, de préférence entre 50 µm et 0,5 cm, est mélangée avec de l'eau et les additifs nécessaires de manière à former une pâte fluide. Cette pâte fluide, dont la teneur en eau est de 20 à 70 % , de préférence de 30 à 50 %, est soumise alors à un premier broyage au moyen d'un broyeur tel qu'un broyeur colloïdal ou un broyeur à marteaux, de manière à ramener à moins de 20 %, de préférence moins de 10 %, la quantité de particules dont la taille dépasse 160 µm. Le mélange résultant est alors soumis, de nouveau, à une ou plusieurs phases de broyage par passage dans un broyeur à billes, les billes utilisées ayant une taille comprise entre 0,8 et 2 mm. On obtient alors une suspension concentrée dont les particules en suspension ont une taille comprise entre 1 et 7 µm, de préférence entre 1,5 et 5 µm. On introduit éventuellement à ce stade dans la suspension concentrée certains additifs solubles, tels certains agents épaississants.

Dans une deuxième étape de préparation des granulés dispersables de la composition A, on procéde à l'agglomération des particules solides présentes dans la suspension ainsi préparée, selon deux modes possibles de réalisation.

Selon un premier mode de réalisation de l'agglomération de cette deuxième étape, la suspension est pulvérisée sous forme de gouttelettes dans un séchoir à air chaud encore appelé atomiseur ou tour à buse. L'eau contenue dans les gouttelettes de suspension s'évapore rapidement au contact de l'air entraînant l'agglomération des particules solides, et la formation de granulés fins et secs. La température de l'air de séchage est généralement comprise entre 120 et 300 °C, de préférence entre 150 et 250 °C. Après tamisage et recyclage partiel, les granulés obtenus ont un diamètre médian, tel que défini précédemment, compris entre 0,150 et 10 mm, de préférence entre 0,200 et 4 mm.

Selon un second mode de réalisation de l'agglomération de cette deuxième étape, on prépare tout d'abord un mélange des ingrédients solides du granulé autres que la matière active. Ce mélange est broyé au jet d'air de façon à obtenir une poudre très fine dont les particules solides un diamètre médian compris entre 5 et 15 µm. On mélange ensuite, par exemple dans un mélangeur à ruban, cette poudre très fine avec la suspension aqueuse contenant la matière active, préparée dans la première étape. On obtient une poudre humide, dont la teneur en eau est comprise entre 10 et 40 %, de préférence entre 15 et 35 %, qui est alors granulée par extrusion à travers une filière. Les granulés ainsi préparés sont séchés dans un séchoir à lit fluide à une température comprise entre 60 et 120 °C.

Ces procédés de préparation des granulés dispersables de la composition A sont particulièrement avantageux en ce que, à aucun moment du procédé, il n'est nécessaire de manipuler des poudres très fines de matière active en agriculture c'est-à-dire un ensemble de particules de taille comprise entre 6 et 30 µm, de préférence entre 8 et 20 µm, susceptibles d'entrer en contact avec les opérateurs, notamment avec les voies respiratoires supérieures de ces derniers.

Les granulés dispersables de la composition B sont préparés par agglomération à sec (notamment sans solvant) des constituants de la composition effervescente broyés à l'état de poudre dont les particules ont une taille comprise entre 5 et 20 µm. L'agglomération à sec est réalisée par une technique de compactage, ou frittage, de préférence à température ambiante ou au moins inférieure à 50°C. De préférence, l'appareil retenu pour cette technique est composé de deux cylindres tournants d'axes parallèles appliqués très fortement l'un vers l'autre et animés chacun d'un mouvement de rotation en sens inverse.

La présente invention a également pour objet un système de conteneurisation comprenant :
a) une composition agrochimique concentrée solide selon la présente invention,
b) un sac dont la paroi est un film constitué d'un matériau filmogène, soluble ou dispersable dans l'eau,
   ledit sac étant fermé et renfermant ladite composition.

Par matériau dispersable dans l'eau, il faut entendre un matériau qui, sous l'effet d'une agitation normale (telle que pratiquée couramment par les agriculteurs dans les cuves de pulvérisation), conduit à une dispersion de fines particules de taille inférieure à 40 µm, de préférence 15 µm.

Selon un aspect avantageux de l'invention, la quantité de composition selon l'invention présente dans un système de conteneurisation tel que défini ci-dessus est une quantité efficace pour traiter une zone donnée de terrain cultivé ou non cultivé.

Selon un aspect avantageux du système de conteneurisation selon l'invention, le rapport diamètre médian de la composition A/diamètre médian de la composition B est supérieur à 5, de préférence supérieur à 2. Dans ce cas en effet l'absence d'homogénéité de la composition résultant du stockage et du transport ne pose pas problème en raison de l'utilisation pratique du système de conteneurisation telle que décrite plus loin dans le présent texte, notamment par le fait que l'agriculteur ne pratique pas de prélèvements successifs dans ladite composition, mais l'utilise en une seule fois.

Selon un autre aspect préféré de l'invention, la densité du système de conteneurisation selon l'invention est supérieure à 1, de préférence comprise entre 1,005 et 2, de sorte que lorsque le système de conteneurisation est introduit dans la cuve du pulvérisateur remplie d'eau, toute sa surface est au contact de l'eau en un temps plus rapide. En outre la vitesse de dispersion des ingrédients solides, notamment de la matière active de la composition A, est particulièrement élevée, notamment par le fait que le contact entre l'eau et la composition selon l'invention est amélioré, et encore par le fait que les bulles gazeuses issues de l'effervescence contribuent au délitage du sachet et à l'accélération de la dispersion dans l'eau des granulés.

En vue de réaliser de tels systèmes de conteneurisation de densité supérieure à 1, on préfère mettre en oeuvre des compositions B selon l'invention comprenant en outre un agent densifiant. Par agent densifiant, il faut entendre une charge ou support minéral ou organique, de densité comprise entre 1,2 et 8 .

De telles charges sont choisies, de manière préférée, parmi les sels de baryum ou de titane, et, de manière encore plus préférée, parmi l'un des composés suivants : sulfate de baryum, monoxyde de titane.

La quantité d'agent densifiant choisie pourra représenter selon les cas de 30 à 90 %, de préférence de 50 à 85 % du total de la composition B.

En vue d'améliorer le contact entre l'eau de la cuve de pulvérisation et le système de conteneurisation selon l'invention et/ou la composition selon l'invention, on préfère mettre en oeuvre des systèmes de conteneurisation exempts de poche gazeuse. Ces systèmes de conteneurisation sont généralement tels que, le sac étant scellé, il n'est pas possible de voir le moindre espace entre la composition effervescente à l'état pulvérulent et la paroi du sac, et/ou qu'il n'est pas possible, manuellement, de décoller la paroi du sac du matériau pulvérulent. Cela correspond donc à une absence de poche d'air ou autrement dit à un taux de remplissage maximum pour la forme considérée du sac. En pratique il est avantageux de remplir les sacs de l'invention sous une pression absolue inférieure à 200 millibar, de préférence inférieure à 150 millibar, de manière à assurer l'adhérence du film à la composition effervescente au moment de l'ensachage et avant scellement final du sac, et même jusqu'à l'usage final des systèmes de conteneurisation selon l'invention, même après stockage.

Selon un autre aspect de l'invention, le sac en matériau filmogène contient la composition selon l'invention avec une atmosphère telle que la quantité d'eau présente dans cette atmosphère soit inférieure à 4 mg par litre, de préférence inférieure à 3 mg par litre. Le volume de l'atmosphère dans le sac est égal au volume intérieur du sac moins le volume des granulés sans les interstices entre ces granulés.

Selon un autre aspect de l'invention, la quantité de composition selon l'invention contenue dans le sac est comprise entre 1 g et 3 kg, de préférence entre 5 g et 1 kg. C'est un avantage de l'invention, par rapport aux pastilles et comprimés connus dans l'art antérieur, de pouvoir mettre dans un même emballage des quantités bien plus importantes de matière active dans une unité manipulée par l'agriculteur.

Selon un autre aspect de l'invention, le matériau filmogène soluble ou dispersable dans l'eau constituant la paroi du sac peut être de type très varié. Il est de préférence soluble dans l'eau. Il s'agit généralement de matériau polymérique tel que l'oxyde de polyéthylène, le polyéthylène glycol, l'amidon ou l'amidon modifié; l'alkyl ou hydroxyalkylcellulose, telle que l'hydroxymethylcellulose, l'hydroxyethylcellulose, l'hydroxypropyl cellulose; la carboxymethylcellulose; les polyvinylethers tels que le poly methyl vinylether ou le poly(2-methoxyethoxyethylene); le poly(2,4-dimethyl-6-triazinylethylene) ; le poly(3-morpholinyl ethylene); le poly(N-1,2,4-triazolylethylene); l'acide poly(vinylsulfonique); les polyanhydrides; les résines melamine-formaldehyde ou urée-formaldehyde à bas poids moléculaire; le poly(2-hydroxyethyl methacrylate); l'acide polyacrylique et ses homologues.

Les matériaux préférés pour constituer les sacs sont l'oxyde de polyéthylène, la methylcellulose, et l'alcool polyvinylique (PVA). Un matériau préféré pour constituer les parois du sac est l'alcool polyvinylique. Quand on utilise le PVA, on préfère mettre en oeuvre un polyacétate de vinyle (ou un autre ester de vinyle) partiellement ou totalement hydrolysé ou alcoolysé, c'est-à-dire hydrolysé ou alcoolysé à 40-100%, de préférence 80-99%. Des copolymères ou d'autres dérivés de ces polymères peuvent aussi être utilisés.

Selon un autre aspect de l'invention, le sac contenant la composition selon l'invention comprend un premier film non plan en matériau soluble ou dispersable dans l'eau, ce premier film étant adjacent à un second film, lui-même en matériau soluble ou dispersable dans l'eau, le long d'une ligne de scellement continu liant ces deux films, ladite ligne constituant une ligne fermée qui ne se recoupe pas et délimitant une région essentiellement plane.

Selon un autre aspect de l'invention, le sac contenant la composition selon l'invention est constitué d'un seul film, et de préférence comprend au moins trois zones de scellement, dont deux sont sensiblement rectilignes et coplanaires et coupées par la troisième en deux zones sensiblement ponctuelles.

Selon une variante de l'invention, les systèmes de conteneurisation décrits ci-avant peuvent comprendre en outre un conteneur extérieur. Ce conteneur extérieur a des parois constituées d'un système à au moins deux couches collées l'une à l'autre, l'une en papier cartonné souple, appelé en anglais kraft-liner, et l'autre en polyéthylène . Ce système bicouche peut comprendre en outre une troisième couche collée au polyéthylène et constituée d'aluminium.

Les sytèmes de conteneurisation selon l'invention sont préparés selon des techniques de conditionnement connues en soi. Grâce à la présentation de la composition selon l'invention sous forme de granulés dispersables, l'ensachage est de réalisation plus aisée en raison de l'aptitude à l'écoulement des granulés. La quantité pondérale de composition agrochimique concentrée solide selon l'invention, introduite dans un sachet est, de façon avantageuse, contrôlée avec une précision améliorée, en raison du caractère à peu près constant présenté par la densité apparente des granulés relativement à leur état de tassement, notamment en comparaison avec la densité apparente d'une poudre.

Les systèmes de conteneurisation selon l'invention s'utilisent pratiquement en les mettant dans des cuves contenant de l'eau; ces cuves peuvent être soumises éventuellement à une agitation et peuvent dans certains cas être portées sur le dos des utilisateurs. Le mélange ainsi obtenu, appelé bouillie de pulvérisation, peut être utilisé tel quel pour être appliqué sur les surfaces cultivées ou non cultivées à traiter. Les systèmes de conteneurisation selon l'invention peuvent également s'utiliser, dans le cas d'un traitement en rizière inondé, par simple lancer sur le plan d'eau de la rizière.

Les exemples ci-après sont donnés uniquement à titre illustratif et non limitatif des compositions et systèmes de conteneurisation selon l'invention.

Dans ces exemples, tous les granulés effervescents cités ont un volume cumulé de pores compris entre 0,025 et 0,10 ml/g. Tous les granulés contenant une ou plusieurs matières actives ont un volume cumulé de pores compris entre 0,20 et 0,30 ml/g et une densité apparente comprise entre 0,4 et 0,6 g/cm³.

### Exemple 1 :

1A) On fabrique 200 g de granulé effervescent sans matière active de la façon suivante. On prépare 420 g d'une poudre obtenue en mélangeant à sec les ingrédients suivants à l'état de solides pulvérulents (dont la taille est comprise entre 50 µm et 1 mm), selon les proportions indiquées : 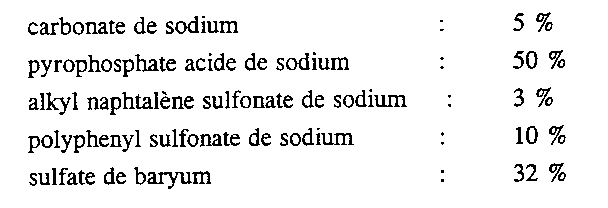
   Ce mélange est broyé au jet d'air pour donner une poudre dont les particules ont une taille comprise entre 5 et 20 µm. Cette poudre est agglomérée à sec et à température ambiante par passage entre deux cylindres tournant en sens contraire et pousssés l'un vers l'autre par l'exercice d'une force de 2 tonnes par centimètre linéaire. Le ruban obtenu est concassé et tamisé pour donner 200 g de granulés de taille comprise entre 0,25 et 0,6 mm et dont la densité apparente est égale à 1,15 g/cm³.
1B) On prépare ensuite un granulé contenant des matières actives fongicides. Pour celà, on prépare tout d'abord 1600 g de poudre que l'on obtient en mélangeant les ingrédients suivants à l'état de solides pulvérulents (dont la taille est comprise entre 100 µm et 1 mm), selon les proportions indiquées : 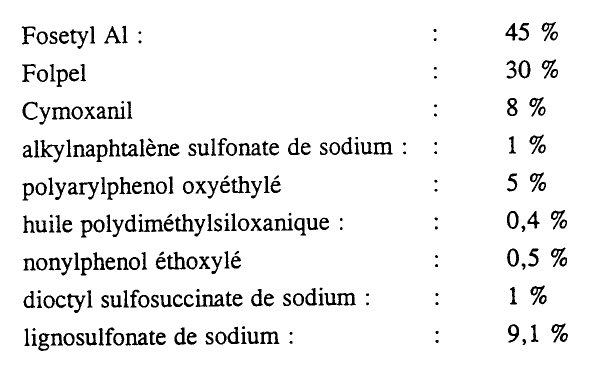
   On mélange la poudre obtenue avec de l'eau de manière à obtenir une suspension aqueuse contenant 60 % en matières solides. Cette suspension est soumise à un premier broyage à l'aide d'un broyeur colloïdal. La quantité de particules dépassant 160 µm est de 6 %. On soumet alors la suspension à un broyage dans un broyeur à billes rempli à 80 % de billes de taille 1 mm. On mesure une taille des particules égale à 5 µm. La suspension est alors pulvérisée dans un atomiseur dont la température de l'air est réglée à 190 °C.
   On recueille après tamisage 800 g de granulés de diamètre médian égal à 200 µm.
1C) On mélange 200 g de granulés comprenant l'agent effervescent préparés précédemment et 800 g de granulés atomisés contenant les matières actives. Ce mélange est homogénéïsé durant 3 minutes dans un tambour tournant selon un axe oblique.

On prélève 300 g du mélange précédent que l'on verse dans une cuve de 100 litres d'eau non agitée. Au contact de l'eau, les granulés se dispersent, notamment sous l'effet de l'effervescence et l'on obtient au bout de 5 minutes un liquide de pulvérisation parfaitement homogène.

### Exemple 2 :

2A) On prépare, dans un premier temps, un granulé effervescent sans matière active en mélangeant à sec les ingrédients suivants à l'état de solides pulvérulents, dans les proportions suivantes : 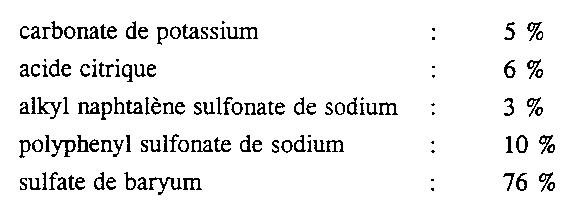
   Ce mélange est granulé selon le mode opératoire décrit dans l'exemple 1. La densité apparente de ces granulés est égale à 1,3 g/cm³.
2B) On prépare ensuite, dans un second temps, un granulé dispersable contenant deux matières actives herbicides. Pour celà, on procède de la façon suivante.
   Dans une première étape, on mélange avec de l'eau les ingrédients solides suivants, à l'état de solides pulvérulents (dont la taille est comprise entre 100 µm et 1 mm), selon les proportions suivantes : 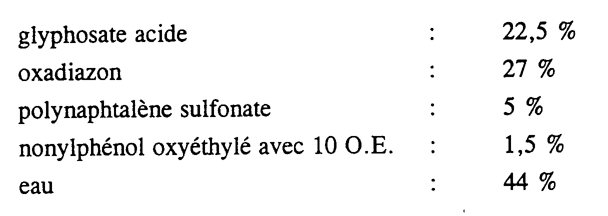
   Ce mélange est soumis à un premier broyage à l'aide d'un broyeur colloïdal. La quantité de particules dépassant 160 µm est de 7 %. On soumet alors la suspension à un broyage dans un broyeur à billes rempli à 80 % de billes de taille 1 mm. On mesure une taille des particules solides de la suspension égale à 5 µm.
   Dans une deuxième étape, on prépare un prémix solide sans matière active en mélangeant des ingrédients à l'état de solides pulvérulents selon les proportions suivantes : 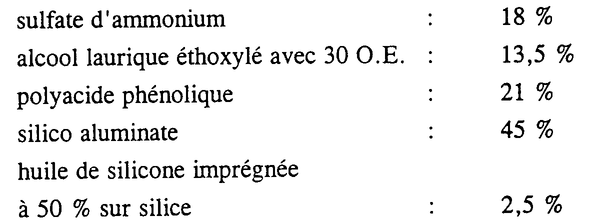
   Ce mélange est broyé à sec au jet d'air ; le dimètre médian des particules est alors de 7 µm.
   Dans une troisième étape, on procéde au mélange, dans un mélangeur à ruban, de 67 g de la suspension préparée à l'étape 1 avec 33 g de prémix solide préparé à l'étape 2. On obtient ainsi une poudre humide, contenant 29,5 % d'eau.
   Dans une quatrième étape, on procède à l'extrusion à travers une filière de la poudre humide obtenue à l'étape précédente, et l'on obtient des granulés sous forme de bâtonnets cylindriques qui sont séchés dans un lit fluide à une température de 100 °C.
2C) On mélange alors en procédant comme dans l'exemple 1 les 2 granulés ainsi préparés, à raison de 75 % pour les granulés avec matières actives et de 25 % pour les granulés effervescents.

On verse 1 kg de ce mélange dans une cuve contenant 100 litres d'eau non agitée. On obtient des résultats identiques à ceux de l'exemple 1.

### Exemple 3 :

On prépare un granulé contenant l'agent effervescent en mélangeant à sec les ingrédients suivants à l'état de solides pulvérulents, selon la formule :

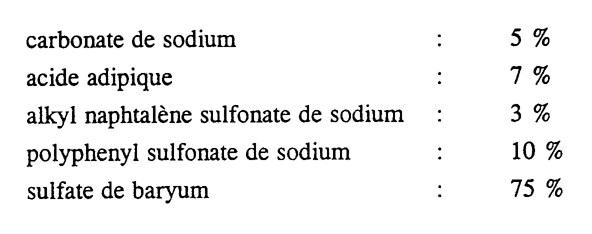

Ce mélange est granulé selon le mode opératoire décrit dans l'exemple 1, les granulés obtenus ayant une densité apparente de 1,3.

On prépare un granulé contenant des matières actives en mélangeant les ingrédients suivants à l'état de solides pulvérulents, selon la formule :

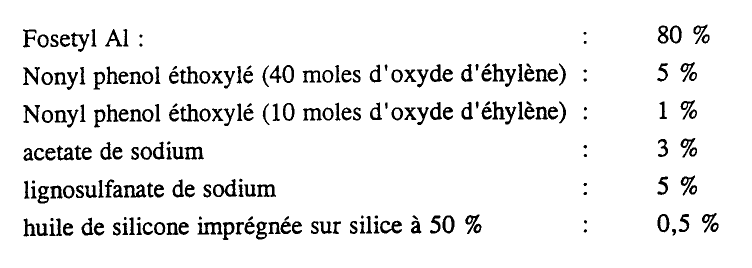

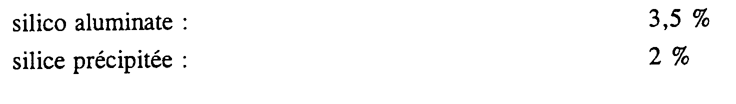

Ce mélange est granulé dans les mêmes conditions que dans l'exemple 1.

On mélange alors, en procédant comme dans l'exemple 1, les 2 granulés ainsi préparés à raison de 60 % pour les granulés avec matières actives et de 40 % pour les granulés effervescents.

On introduit 500 g de ce mélange dans une cuve de 100 litres d'eau non agitée. On obtient des résultats identiques à ceux de l'exemple 1.

### Exemple 4 :

On procéde comme à l'exemple 1, pour fabriquer un granulé effervescent et un granulé contenant une matière active selon les formules suivantes :

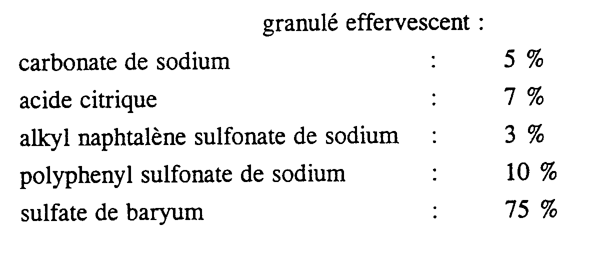

Ce granulé a une densité apparente égale à 1,3.

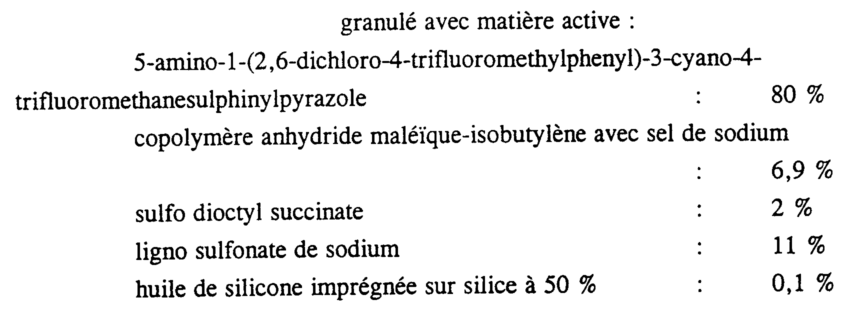

La préparation du 5-amino-1-(2,6-dichloro-4-triflroromethylphenyl)-3-cyano4-trifluorormethanesulphinlpyrazole est décrite dans la demande de brevet européen n° EP 295117. La DL 50 de ce produit ( sur lapin) est inférieure à 500 mg/kg.

On mélange alors en procédant comme dans l'exemple 1 les 2 granulés ainsi préparés à raison de 10 % pour les granulés avec matières actives et de 90 % pour les granulés effervescents.

On introduit 100 g de ce mélange dans une cuve contenant 100 litres d'eau non agitée. On obtient des résultats identiques à ceux de l'exemple 1.

### Exemple 5 :

On prépare un granulé effervescent sans matière active identique à celui de l'exemple 1.

En procédant également comme dans l'exemple 1, on prépare un granulé contenant une matière active et les divers ingrédients suivants, selon les proportions indiquées :

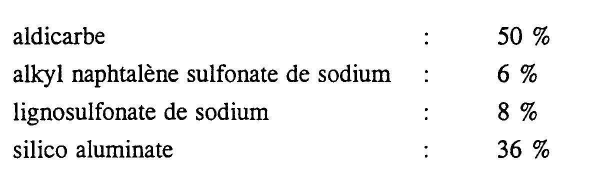

La DL 50 de l'aldicarbe (sur lapin) est de 5 mg/kg.

Le mélange des 2 granulés est préparé comme dans l'exemple 1, à raison de 15 % pour les granulés avec matières actives et de 85 % pour les granulés effervescents.

40 g de ce mélange sont introduits dans un sachet en alcool polyvinylique (polyvinylacétate de vinyle hydrolysé à 88 %) soluble dans l'eau froide. Ce sachet a été obtenu à partir d'un seul film rectangulaire qui a reçu deux lignes de soudure perpendiculaires. Après introduction des granulés, le sac reçoit une troisième ligne de soudure par scellage à chaud.

Ce sac est jeté dans une cuve de 100 litre d'eau agitée. Sa densité étant supérieure à 1, ce sac va au fond de la cuve en moins de 10 secondes. L'eau pénètre dans le sachet en moins d'une minute, et l'effervescence produite provoque le déchiquetage du film de PVA, ce qui facilite sa dissolution totale, atteinte en trois minutes. Les granulés se dispersent rapidement de façon homogène dans toutes les parties de la cuve.

### Exemple 6 :

Le mélange de l'exemple 4 est introduit selon la même méthode que dans l'exemple 5 à raison de 10 g dans un sachet. La densité du système de conteneurisation obtenu est égale à 1,05.

Ce sachet est jeté dans un pulvérisateur de capacité de 20 litres, qui peut être fixé au dos de l'utilisateur, et complétement rempli d'eau. Après un retournement du pulvérisateur on obtient un liquide de pulvérisation parfaitement homogène.

### Exemple 7 :

On prépare un granulé effervescent sans matière active identique à celui de l'exemple 2.

En procédant également comme dans l'exemple 1, on prépare un granulé contenant une matière active et les divers ingrédients suivants, selon les proportions indiquées :

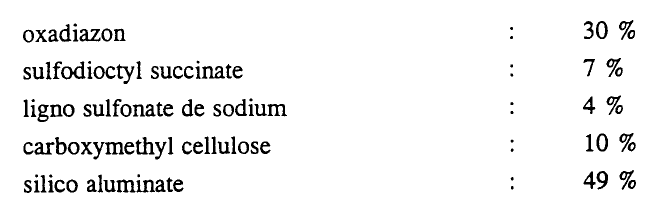

Le mélange des 2 granulés est préparé comme dans l'exemple 1, à raison de 20 % pour les granulés avec matière active et de 80 % pour les granulés effervescents.

En procédant comme dans l'exemple 5, on introduit 20 g de ce mélange dans un sachet en alcool polyvinylique que l'on jette tous les mètres dans une rizière recouverte d'eau. Le sachet se dissout et les granulés se dispersent en 3 minutes, donnant lieu à une répartition homogène du produit dans la rizière.

### Exemple 8:

On répète l'exemple 5 en remplaçant le granulé contenant une matière active par le granulé obtenu selon les proportions indiquées :

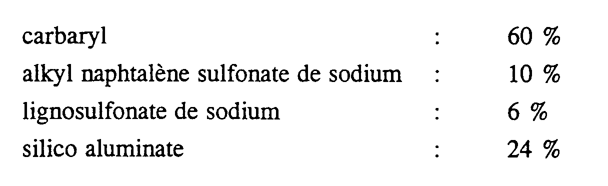

On obtient des résultats identiques à ceux de l'exemple 5.

### Exemple 9 :

On répète l'exemple 5 en remplaçant le granulé contenant une matière active par le granulé obtenu selon les proportions indiquées :

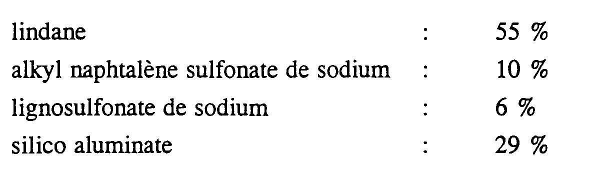

On obtient des résultats identiques à ceux de l'exemple 5.

## Revendications

1. Compositions agrochimiques concentrées solides caractérisées en ce qu'elles sont un mélange homogène :
- d'une (ou plusieurs) compositions concentrées A sous forme de granulés dispersables, chaque granulé contenant au moins une matière active et ne contenant pas d'agent effervescent, et ayant un volume cumulé de pores compris entre 0,17 et 0,35, de préférence entre 0,20 et 0,30 ml/g et et ayant une densité apparente comprise entre 0,35 et 0,8, de préférence entre 0,4 et 0,7 g/cm³ ; et
- d'une composition concentrée B sous forme de granulés dispersables, chaque granulé contenant un agent effervescent et ne contenant pas de matière active, ayant un volume cumulé de pores compris entre 0,020 et 0,13 de préférence entre 0,025 et 0,10 ml/g et ayant une densité apparente comprise entre 0,8 et 1,5 g/cm³, de préférence entre 1,0 et 1,4 g/cm³ ;
- le rapport quantitatif A/B étant compris entre 0,01 et 30, de préférence entre 0,05 et 10, encore plus préférentiellement entre 0,08 et 5.

2. Compositions agrochimiques concentrées solides selon la revendication 1, caractérisées en ce que la matière active en agriculture utilisable dans les granulés dispersables de la composition A est un pesticide, de préférence un insecticide, un nématicide ou un acaricide.

3. Compositions agrochimiques concentrées solides selon l'une des revendications 1 ou 2, caractérisées en ce que la matière active utilisable dans les granulés dispersables de la composition A a une dose léthale (DL) 50 inférieure à 2000 mg/kg, de préférence inférieure à 1550 mg/kg, et encore plus préférentiellement inférieure à 500 mg/kg.

4. Compositions agrochimiques concentrées solides selon l'une des revendications 1 à 3, caractérisées en ce que les granulés dispersables utilisables dans les compositions A et B ont un diamètre médian compris entre 0,150 et 10 mm, de préférence entre 0,200 et 4 mm.

5. Compositions agrochimiques concentrées solides selon l'une des revendications 1 à 4, caractérisées en ce que les granulés dispersables des compositions A et B ont une taille minimum supérieure à 0,05 mm, de préférence supérieure à 0,15 mm.

6. Compositions agrochimiques concentrées solides selon l'une des revendications 1 à 5, caractérisées en ce que le rapport diamètre médian des granulés de la composition A / diamètre médian des granulés de la composition B est inférieur ou égal à 5, de préférence inférieur ou égal à 2.

7. Compositions agrochimiques concentrées solides selon l'une des revendications 1 à 6, caractérisées en ce que la teneur en matière active ou en matières actives de la (ou des ) compostions concentrées A est comprise entre 5 et 100 %, de préférence entre 50 et 90 %.

8. Compositions agrochimiques concentrées solides selon l'une des revendications 1 à 7, caractérisées en ce que l'agent effervescent de la composition B est constitué d'un couple de produits tels qu'un carbonate (ou hydrogénocarbonate, de préférence alcalin) et un acide (de préférence solide et faible), dont le rapport pondéral acide/carbonate est compris entre 0,3 et 30, de préférence entre 0,5 et 15.

9. Compositions agrochimiques concentrées solides selon la revendication 8, caractérisées en ce que le carbonate alcalin est dérivé d'un métal alcalin (notamment sodium ou potassium ) ou alcalino-terreux ( calcium ou magnésium ), ou d'un cation ammonium ou organoammonium, et, de préférence, dérivé d'un métal alcalin, et en ce que l'acide est un acide carboxylique ou polycarboxylique ou phosphorique ou phosphonique ou l'un de leurs sels ou esters à fonction acide.

10. Compositions agrochimiques concentrées solides selon l'une des revendications 1 à 9, caractérisées en ce que la teneur de l'agent effervescent dans la composition concentrée B est comprise entre 3 et 95 %, de préférence entre 5 et 60 %.

11. Compositions agrochimiques concentrées solides selon l'une des revendications 1 à 10, caractérisées en ce que les granulés dispersables des compositions A et B comprennent en outre :
- de 0,1 à 10 %, de préférence de 0,5 à 5 % d'un agent mouillant,
- de 0,3 à 25 %, de préférence de 2 à 20 % d'un agent dispersant, et
- de 0 à 90 %, de préférence de 0 à 30 % d'un support ou charge, soluble ou insoluble dans l'eau.

12. Compositions agrochimiques concentrées solides selon l'une des revendications 1 à 11, caractérisées en ce que les granulés dispersables des compositions A et B ont :
* un temps de mouillabilité inférieur à 5 mn, de préférence inférieur à 2 mn,
* un taux de dispersabilité supérieur à 85 %, de préférence supérieur à 92 %, et
* un taux de suspensibilité supérieur à 50 %, de préférence supérieur à 70 %.

13. Système de conteneurisation comprenant :
a) une composition agrochimique concentrée solide selon l'une des revendications 1 à 12 ; et
b) un sac dont la paroi est un film constitué d'un matériau filmogène, soluble ou dispersable dans l'eau,
ledit sac étant fermé et renfermant ladite composition.

14. Système de conteneurisation selon la revendication 13 caractérisé en ce que la quantité de composition agrochimique concentrée solide est une quantité efficace pour traiter une zone donnée de terrain cultivé ou non cultivé.

15. Système de conteneurisation selon l'une des revendications 13 ou 14 caractérisé en ce que sa densité est supérieure à 1, de préférence comprise entre 1,005 et 2.

16. Système de conteneurisation selon l'une des revendications 13 à 15 caractérisé en ce que la composition B comprend 30 à 90 %, de préférence 50 à 85 % d'un agent densifiant c'est-à-dire une charge ou support minéral ou organique, de densité comprise entre 1,2 et 8.

17. Système de conteneurisation selon l'une des revendications 13 à 16 caractérisé en ce que l'agent densifiant est choisi parmi les sels de baryum ou de titane, et, de préférence, parmi le sulfate de baryum ou le monoxyde de titane.

18. Système de conteneurisation selon l'une des revendications 13 à 17 caractérisé en ce que la quantité de composition agrochimique concentrée solide contenue dans le sac est comprise entre 1 g et 3 kg, de préférence entre 5 g et 1 kg.

19. Système de conteneurisation selon l'une des revendications 13 à 18 caractérisé en ce que le matériau filmogène soluble ou dispersable dans l'eau constituant la paroi du sac est un matériau polymérique tel que l'oxyde de polyéthylène, le polyéthylène glycol, l'amidon ou l'amidon modifié; l'alkyl ou hydroxyalkylcellulose, telle que l'hydroxymethylcellulose, l'hydroxyethylcellulose, l'hydroxypropyl cellulose; la carboxymethylcellulose; les polyvinylethers tels que le poly methyl vinylether ou le poly(2-methoxyethoxyethylene); le poly(2,4-dimethyl-6-triazinylethylene) ; le poly(3-morpholinyl ethylene); le poly(N-1,2,4-triazolylethylene); l'acide poly(vinylsulfonique); les polyanhydrides; les résines melamine-formaldehyde ou urée-formaldehyde à bas poids moléculaire; le poly(2-hydroxyethyl methacrylate); l'acide polyacrylique et ses homologues.

20. Système de conteneurisation selon l'une des revendications 13 à 19 caractérisé en ce que le matériau filmogène soluble ou dispersable dans l'eau constituant la paroi du sac est choisi parmi l'oxyde de polyéthylène, la methylcellulose, ou l'alcool polyvinylique (PVA), et est de préférence l'alcool polyvinylique.

21. Système de conteneurisation selon l'une des revendications 13 à 20, caractérisé en ce qu'il comprend en outre un conteneur extérieur constitué par une couche de papier cartonné souple et par une couche de polyéthylène collées l'une à l'autre, et éventuellement une troisième couche collée au polyéthylène et constituée d'aluminium.

22. Procédé de préparation d'un mélange destiné à être appliqué sur les surfaces cultivées ou non cultivées à traiter, caractérisé en ce qu'on met dans l'eau d'une cuve de pulvérisation une composition agrochimique concentrée solide selon l'une des revendications 1 à 12 ou un système de conteneurisation selon l'une des revendications 13 à 21.

## Claims

1. Solid concentrated agrochemical compositions, characterized in that they are a homogeneous mixture:
- of one (or a number of) concentrated compositions A in the form of dispersible granules, each granule containing at least one active material and not containing an effervescent agent, and having a cumulative pore volume of between 0.17 and 0.35, preferably between 0.20 and 0.30, ml/g and having an apparent density of between 0.35 and 0.8, preferably between 0.4 and 0.7, g/cm³; and
- of a concentrated composition B in the form of dispersible granules, each granule containing an effervescent agent and not containing an active material, having a cumulative pore volume of between 0.020 and 0.13, preferably between 0.025 and 0.10, ml/g and having an apparent density of between 0.8 and 1.5 g/cm³, preferably between 1.0 and 1.4 g/cm³;
- the A/B quantitative ratio being between 0.01 and 30, preferably between 0.05 and 10 and more preferentially still between 0.08 and 5.

2. Solid concentrated agrochemical compositions according to claim 1, characterized in that the material which is active in agriculture which can be used in the dispersible granules of the composition A is a pesticide, preferably an insecticide, a nematicide or an acaricide.

3. Solid concentrated agrochemical compositions according to either of claims 1 and 2, characterized in that the active material which can be used in the dispersible granules of the composition A has an LD₅₀ of less than 2000 mg/kg, preferably of less than 1550 mg/kg and more preferably still of less than 500 mg/kg.

4. Solid concentrated agrochemical compositions according to one of claims 1 to 3, characterized in that the dispersible granules which can be used in the compositions A and B have a median diameter of between 0.150 and 10 mm and preferably between 0.200 and 4 mm.

5. Solid concentrated agrochemical compositions according to one of claims 1 to 4, characterized in that the dispersible granules of the compositions A and B have a minimum size greater than 0.05 mm and preferably greater than 0.15 mm.

6. Solid concentrated agrochemical compositions according to one of claims 1 to 5, characterized in that the median diameter of the granules of the composition A/median diameter of the granules of the composition B ratio is less than or equal to 5 and preferably less than or equal to 2.

7. Solid concentrated agrochemical compositions according to one of claims 1 to 6, characterized in that the content of active material or of active materials in the concentrated composition(s) A is between 5 and 100% and preferably between 50 and 90%.

8. Solid concentrated agrochemical compositions according to one of claims 1 to 7, characterized in that the effervescent agent of the composition B consists of a pair of products such as a carbonate (or, preferably alkaline, hydrogencarbonate) and an acid (preferably solid and weak), the acid/carbonate ratio by weight of which is between 0.3 and 30 and preferably between 0.5 and 15.

9. Solid concentrated agrochemical compositions according to claim 8, characterized in that the alkaline carbonate is derived from an alkali metal (especially sodium or potassium) or alkaline-earth metal (calcium or magnesium), or from an ammonium or organoammonium cation, and preferably derived from an alkali metal, and in that the acid is a carboxylic or polycarboxylic or phosphoric or phosphonic acid or one of their salts or esters containing an acidic functional group.

10. Solid concentrated agrochemical compositions according to one of claims 1 to 9, characterized in that the content of effervescent agent in the concentrated composition B is between 3 and 95% and preferably between 5 and 60%.

11. Solid concentrated agrochemical compositions according to one of claims 1 to 10, characterized in that the dispersible granules of the compositions A and B additionally comprise:
- from 0.1 to 10% and preferably from 0.5 to 5% of a wetting agent,
- from 0.3 to 25% and preferably from 2 to 20% of a dispersing agent, and
- from 0 to 90% and preferably from 0 to 30% of a vehicle or filler which is soluble or insoluble in water.

12. Solid concentrated agrochemical compositions according to one of claims 1 to 11, characterized in that the dispersible granules of the compositions A and B have:
* a wettability time of less than 5 min and preferably of less than 2 min,
* a degree of dispersibility greater than 85% and preferably greater than 92%, and
* a degree of suspensibility greater than 50% and preferably greater than 70%.

13. Containerization system comprising:
a) a solid concentrated agrochemical composition according to one of claims 1 to 12; and
b) a bag whose wall is a film consisting of a film-forming material which is soluble or dispersible in water,
the said bag being closed and containing the said composition.

14. Containerization system according to claim 13, characterized in that the quantity of solid concentrated agrochemical composition is a quantity which is effective for treating a given region of cultivated or uncultivated ground.

15. Containerization system according to either of claims 13 and 14, characterized in that its density is greater than 1 and preferably between 1.005 and 2.

16. Containerization system according to one of claims 13 to 15, characterized in that the composition B comprises 30 to 90% and preferably 50 to 85% of a densifying agent, that is to say an inorganic or organic filler or vehicle with a density of between 1.2 and 8.

17. Containerization system according to one of claims 13 to 16, characterized in that the densifying agent is chosen from barium or titanium salts and, preferably, from barium sulphate or titanium monoxide.

18. Containerization system according to one of claims 13 to 17, characterized in that the quantity of solid concentrated agrochemical composition contained in the bag is between 1 g and 3 kg and preferably between 5 g and 1 kg.

19. Containerization system according to one of claims 13 to 18, characterized in that the film-forming material, which is soluble or dispersible in water, constituting the wall of the bag is a polymeric material, such as poly(ethylene oxide), poly(ethylene glycol), starch or modified starch; alkylcellulose or hydroxyalkylcellulose, such as hydroxymethylcellulose, hydroxyethylcellulose or hydroxypropylcellulose; carboxymethylcellulose; poly(vinyl ether)s, such as poly(methyl vinyl ether) or poly(2-methoxyethoxyethylene) ; poly(2,4-dimethyl-6-triazinylethylene); poly(3-morpholinylethylene); poly(N-1,2,4-triazolylethylene); poly(vinylsulphonic acid); polyanhydrides; low molecular weight melamine/formaldehyde or urea/formaldehyde resins; poly(2-hydroxyethyl methacrylate); poly(acrylic acid) and its homologues.

20. Containerization system according to one of claims 13 to 19, characterized in that the film-forming material, which is soluble or dispersible in water, constituting the wall of the bag is chosen from poly(ethylene oxide), methylcellulose or poly(vinyl alcohol) (PVA) and is preferably poly(vinyl alcohol).

21. Containerization system according to one of claims 13 to 20, characterized in that it additionally comprises an external container consisting of a layer of flexible cardboard paper and of a layer of polyethylene adhesively bonded to one another and optionally a third layer adhesively bonded to the polyethylene and consisting of aluminium.

22. Process for the preparation of a mixture intended to be applied to the cultivated or uncultivated surfaces to be treated, characterized in that a solid concentrated agrochemical composition according to one of claims 1 to 12 or a containerization system according to one of claims 13 to 21 is placed in the water of a spray tank.

## Patentansprüche

1. Feste, konzentrierte, agrochemische Zusammensetzungen, dadurch gekennzeichnet, daß sie ein homogenes Gemisch darstellen aus:
- einer (oder mehreren) konzentrierten Zusammensetzung(en) A in Form von dispergierbarem Granulat, wobei das Granulat mindestens einen Wirkstoff, jedoch kein Aufschäummittel enthält, mit einem Gesamtporenvolumen im Bereich von 0,17 bis 0,35 und vorzugsweise 0,20 bis 0,30 ml/g und einer Schüttdichte im Bereich von 0,35 bis 0,8 und vorzugsweise 0,4 bis 0,7 g/cm³, und
- einer konzentrierten Zusammensetzung B in Form von dispergierbarem Granulat, wobei das Granulat ein Aufschäummittel, jedoch keinen Wirkstoff enthält, mit einem Gesamtporenvolumen im Bereich von 0,020 bis 0,13 und vorzugsweise von 0,025 bis 0,10 ml/g und einer Schuttdichte im Bereich von 0,8 bis 1,5 g/cm³ und vorzugsweise von 1,0 bis 1,4 g/cm³,
wobei das Mengenverhältnis A/B im Bereich von 0,01 bis 30, vorzugsweise von 0,05 bis 10 und noch bevorzugter von 0,08 bis 5 liegt.

2. Feste, konzentrierte, agrochemische Zusammensetzungen nach Anspruch 1, dadurch gekennzeichnet, daß es sich bei dem Wirkstoff für die Landwirtschaft, der in den dispergierbaren Granulaten der Zusammensetzung A verwendet werden kann, um ein Pestizid, vorzugsweise ein Insektizid, ein Nematizid oder ein Akarizid, handelt.

3. Feste, konzentrierte, agrochemische Zusammensetzungen nach einem der Ansprüche 1 oder 2, dadurch gekennzeichnet, daß der Wirkstoff, der in den dispergierbaren Granulaten der Zusammensetzung A verwendet werden kann, eine mittlere Letaldosis (LD) 50 unter 2000 mg/kg, vorzugsweise unter 1550 mg/kg und noch bevorzugter unter 500 mg/kg aufweist.

4. Feste, konzentrierte, agrochemische Zusammensetzungen nach einem der Ansprüche 1 bis 3, dadurch gekennzeichnet, daß die dispergierbaren Granulate, die in den Zusammensetzungen A und B verwendet werden können, einen mittleren Durchmesser im Bereich von 0,150 bis 10 mm, vorzugsweise von 0,200 bis 4 mm, aufweisen.

5. Feste, konzentrierte, agrochemische Zusammensetzungen nach einem der Ansprüche 1 bis 4, dadurch gekennzeichnet, daß die dispergierbaren Granulate der Zusammensetzungen A und B eine Mindestgröße über 0,05 mm, vorzugsweise über 0,15 mm, aufweisen.

6. Feste, konzentrierte, agrochemische Zusammensetzungen nach einem der Ansprüche 1 bis 5, dadurch gekennzeichnet, daß das Verhältnis des mittleren Durchmessers der Granulatkörner der Zusammensetzung A zu dem mittleren Durchmesser der Granulatkörner der Zusammensetzung B kleiner oder gleich 5, vorzugsweise kleiner oder gleich 2, ist.

7. Feste, konzentrierte, agrochemische Zusammensetzungen nach einem der Ansprüche 1 bis 6, dadurch gekennzeichnet, daß der Mengenanteil des Wirkstoffes oder der Wirkstoffe der konzentrierten Zusammensetzung (oder Zusammensetzungen) A im Bereich von 5 bis 100 %, vorzugsweise von 50 bis 90 %, liegt.

8. Feste, konzentrierte, agrochemische Zusammensetzungen nach einem der Ansprüche 1 bis 7, dadurch gekennzeichnet, daß das Aufschäummittel der Zusammensetzung B aus einem Produktpaar, wie einem Carbonat (oder Hydrogencarbonat, vorzugsweise einem Alkalicarbonat oder Alkalihydrogencarbonat) und einer Säure (vorzugsweise einer festen und schwachen Säure), besteht, bei dem das Gewichtsverhältnis Säure/Carbonat im Bereich von 0,3 bis 30, vorzugsweise von 0,5 bis 15, liegt.

9. Feste, konzentrierte, agrochemische Zusammensetzungen nach Anspruch 8, dadurch gekennzeichnet, daß das Alkalicarbonat von einem Alkalimetall (insbesondere Natrium oder Kalium), von einem Erdalkalimetall (Calcium oder Magnesium), von Ammonium oder von Ammonium mit organischen Substituenten und vorzugsweise von einem Alkalimetall abgeleitet ist und dadurch, daß die Säure eine Carbonsäure, eine Polycarbonsäure, eine Phosphorsäure, eine Phosphonsäure oder eines der Salze oder einer der Ester dieser Säuren mit Säuregruppe ist.

10. Feste, konzentrierte, agrochemische Zusammensetzungen nach einem der Ansprüche 1 bis 9, dadurch gekennzeichnet, daß der Mengenanteil des Aufschäummittels in der konzentrierten Zusammensetzung B im Bereich von 3 bis 95 %, vorzugsweise von 5 bis 60 %, liegt.

11. Feste, konzentrierte, agrochemische Zusammensetzungen nach einem der Ansprüche 1 bis 10, dadurch gekennzeichnet, daß die dispergierbaren Granulate der Zusammensetzungen A und B ferner enthalten:
- 0,1 bis 10 %, vorzugsweise 0,5 bis 5 %, eines Netzmittels,
- 0,3 bis 25 %, vorzugsweise 2 bis 20 %, eines Dispergiermittels, und
- 0 bis 90 %, vorzugsweise 0 bis 30 %, eines in Wasser löslichen oder unlöslichen Trägers oder Füllstoffes.

12. Feste, konzentrierte, agrochemische Zusammensetzungen nach einem der Ansprüche 1 bis 11, dadurch gekennzeichnet, daß die dispergierbaren Granulate der Zusammensetzungen A und B:
- eine Benetzbarkeitszeit unter 5 min, vorzugsweise unter 2 min,
- einen Dispergierbarkeitsgrad über 85 %, vorzugsweise über 92 %, und
- einen Suspendierbarkeitsgrad über 50 %, vorzugsweise über 70 %,
aufweisen.

13. Containerisierungssystem, umfassend:
a) eine feste, konzentrierte, agrochemische Zusammensetzung nach einem der Ansprüche 1 bis 12 und
b) einen Sack, bei dessen Wandung es sich um eine Folie handelt, welche aus einem wasserlöslichen oder in Wasser dispergierbaren filmbildenden Material besteht.

14. Containerisierungssystem nach Anspruch 13, dadurch gekennzeichnet, daß die Menge der festen, konzentrierten, agrochemischen Zusammensetzung eine zur Behandlung eines gegebenen Bereichs eines bestellten oder unbestellten Geländes wirksame Menge ist.

15. Containerisierungssystem nach einem der Ansprüche 13 oder 14, dadurch gekennzeichnet, daß die Dichte des Containerisierungssystems über 1, vorzugsweise im Bereich von 1,005 bis 2, liegt.

16. Containerisierungssystem nach einem der Ansprüche 13 bis 15, dadurch gekennzeichnet, daß die Zusammensetzung B 30 bis 90 %, vorzugsweise 50 bis 85 %, eines Mittels zum Erhöhen der Dichte, d.h. eines anorganischen oder organischen Füllstoffes oder Trägers mit einer Dichte im Bereich von 1,2 bis 8 enthält.

17. Containerisierungssystem nach einem der Ansprüche 13 bis 16, dadurch gekennzeichnet, daß das Mittel zum Erhöhen der Dichte unter den Bariumsalzen oder Titansalzen und vorzugsweise unter Bariumsulfat oder Titanmonooxid ausgewählt ist.

18. Containerisierungssystem nach einem der Ansprüche 13 bis 17, dadurch gekennzeichnet, daß die in dem Sack enthaltene Menge der festen, konzentrierten, agrochemischen Zusammensetzung im Bereich von 1 g bis 3 kg, vorzugsweise von 5 g bis 1 kg, liegt.

19. Containerisierungssystem nach einem der Ansprüche 13 bis 18, dadurch gekennzeichnet, daß es sich bei dem wasserlöslichen oder in Wasser dispergierbaren filmbildenden Material, aus dem die Wandung des Sacks besteht, um ein polymeres Material, wie Polyethylenoxid, Polyethylenglykol, Stärke oder modifizierte Stärke; Alkylcellulose oder Hydroxyalkylcellulose, wie Hydroxymethylcellulose, Hydroxyethylcellulose oder Hydroxypropylcellulose; Carboxymethylcellulose; Polyvinylether, wie Polymethylvinylether oder Poly(2-methoxyethoxyethylen); Poly(2,4-dimethyl-6-triazinylethylen); Poly(3-morpholinylethylen); Poly(N-1,2,4-triazolylethylen); Poly(vinylsulfonsäure); Polyanhydride; Melamin-Formaldehyd-Harze oder Harnstoff-Formaldehyd-Harze mit niedrigem Molekulargewicht; Poly(2-hydroxyethyl-methacrylat); Polyacrylsäure und ihre Homologen handelt.

20. Containerisierungssystem nach einem der Ansprüche 13 bis 19, dadurch gekennzeichnet, daß das wasserlösliche oder in Wasser dispergierbare filmbildende Material, aus dem die Wandung des Sacks besteht, unter Polyethylenoxid, Methylcellulose oder Polyvinylalkohol (PVA) und vorzugsweise Polyvinylalkohol ausgewählt ist.

21. Containerisierungssystem nach einem der Ansprüche 13 bis 20, dadurch gekennzeichnet, daß es ferner einen äußeren Behälter umfaßt, der aus einer Schicht aus biegsamer Pappe und einer Polyethylenschicht, wobei die Schichten aneinander geklebt sind, und gegebenenfalls einer dritten Schicht besteht, die an das Polyethylen geklebt ist und aus Aluminium besteht.

22. Verfahren zur Herstellung eines Gemisches, das dazu bestimmt ist, auf die zu behandelnden bestellten oder unbestellten Oberflächen angewendet zu werden, dadurch gekennzeichnet, daß eine feste, konzentrierte, agrochemische Zusammensetzung nach einem der Ansprüche 1 bis 12 oder ein Containerisierungssystem nach einem der Ansprüche 13 bis 21 in das Wasser eines Spritztanks gegeben wird.
